# EUROPEAN PATENT APPLICATION

(11) **EP 1 176 327 A2**
(43) Date of publication of application: **30.01.2002**
(21) Application number: 01830468.3
(22) Date of filing: 13.07.2001
(51) Int. Cl.: F16D 3/84

(54) **Wide-angle constant velocity joint with oil-bath lubrication and protective bellows**

(30) Priority: 24.07.2000 IT FI000169
(71) Applicant: Bondioli, Edi, I-46029 Suzzara, Mantova (IT)
(72) Inventor: Bondioli, Edi, I-46029 Suzzara, Mantova (IT)
(74) Representative: Mannucci, Gianfranco, Dott.-Ing.

(57) **Abstract**

Wide-angle constant velocity joint, with two yokes (10, 14), two cross journals (18) and a central core (16) forming a sliding housing (24) for a securing member (20) for the ball ends (10B, 14B) of the two yokes; the terminal edges (36C, 36B; 38C; 38B) of protective bellows means (36; 38), which delimit a space which surrounds the joint and can contain liquid lubricant for oil-bath lubrication, are tightly engaged with the central core (16) and with the base (10A; 14A) of each of the two yokes (10, 14).

## Description

In transmissions used in agricultural machinery and for other applications, widespread use is made of wide-angle constant velocity joints, operating at angles up to approximately 80°. Up to the present time, these constant velocity joints have been designed for grease lubrication, requiring a continuous replacement of the lubricant, which is rapidly dispersed in the environment. This leads to environmental problems, high costs due to the consumption of lubricant, manual operations and down time, and risks of serious damages to the joints, regular lubrication of which is essential for the life of the joint.

The invention achieves the object of overcoming all the drawbacks mentioned above, which are well known to those skilled in the art. These and other objects and advantages will be made clear by the following text.

The constant velocity joint in question essentially comprises flexible protective means which are sealingly engaged with the input and output members of the joint, and which delimit a space which surrounds the joint and which can contain liquid lubricant, or lubricant which becomes fluid in normal conditions, in order to provide oil-bath lubrication of the joint.

An advantageous embodiment is designed for a constant velocity joint of the aforesaid type, which comprises two yokes forming the input and output members of the joint, two cross journals and a central core forming a sliding housing in a transverse geometrical plane for a securing member for the ball ends of the two yokes; constant velocity joints of this kind are currently equipped for grease lubrication. According to the invention, however, the joint can comprise, on the central core and on the base of each of the two yokes, annular tracks for a sealed fit to the edges of protective bellows means, which delimit a space which surrounds the joint and can contain liquid lubricant for oil-bath lubrication. This solution is directly derived from the conventional configuration of a wide-angle joint with grease lubrication.

Other characteristics of the invention are specified by the attached subsidiary claims.

The invention will be more clearly understood from the description and the attached drawing, which shows a practical and non-restrictive example of the invention. In the drawing,
Fig. 1 shows a general view of a telescopic transmission shaft with a constant velocity joint;
Figs. 2 and 3 show an enlarged detail of Fig. 1, with the constant velocity joint in the in-line and angled configuration respectively;
Figs. 4 and 5 show a yoke component in isolation, in an enlargement of the cross section in Fig. 2 and in the cross section through V-V in Fig. 4;
Fig. 6 shows in isolation a central core of the constant velocity joint, in partial section;
Figs. 7 and 8 show local views through VII-VII and VIII-VIII of Fig. 6;
Figs. 9 and 10 show in isolation a discoid securing member of the joint, in a front view and in a cross section through X-X in Fig. 9;
Fig. 11 shows in isolation a protective bellows, in section;
Figs. 12, 12A and 13, 13A show, in isolation, two flat rings to be combined with the protective bellows, each in a view and in an enlarged detail;
Figs. 14 and 15 show a tightening band, in a front view and in a view through XV-XV in Fig. 14;
Figs. 16 and 17 show in isolation a cross journal, in partial section and in an enlarged detail; and
Figs. 18 and 19 show a screw plug for the supply of lubricating oil, in section through XVIII- XVIII and in an axial view.

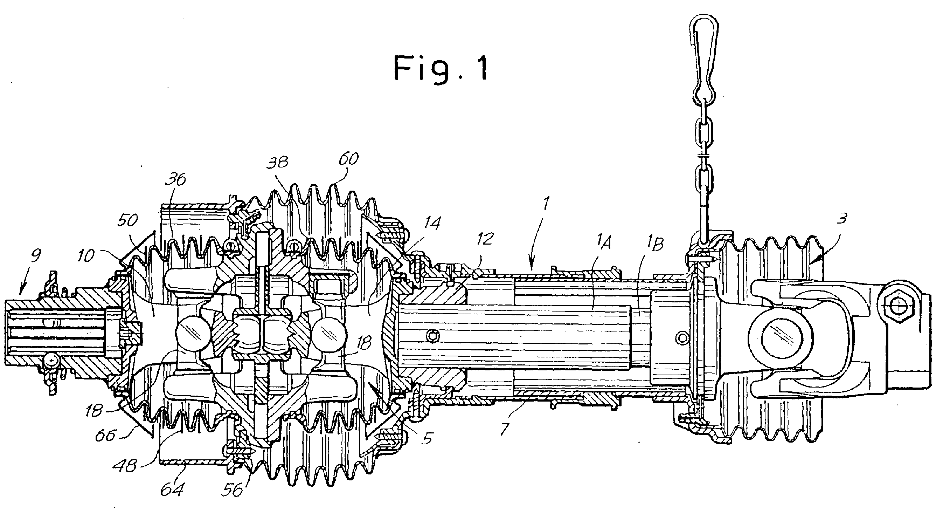

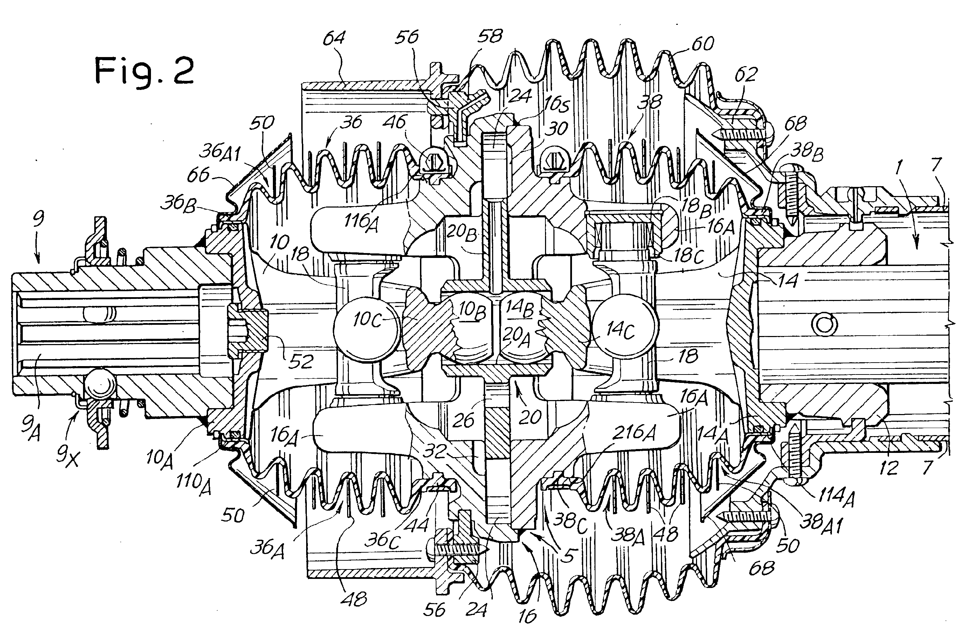

According to the illustrations in the attached drawing, and with initial reference to Figs. 1 and 2, the number 1 indicates a telescopic shaft, formed by two tubular components 1A and 1B extending in the form of a telescope, with an end joint 3 at one end and a wide-angle constant velocity joint 5 at the other end; the telescopic shaft 1 is provided with a protective sleeve 7. The whole is essentially a known embodiment.

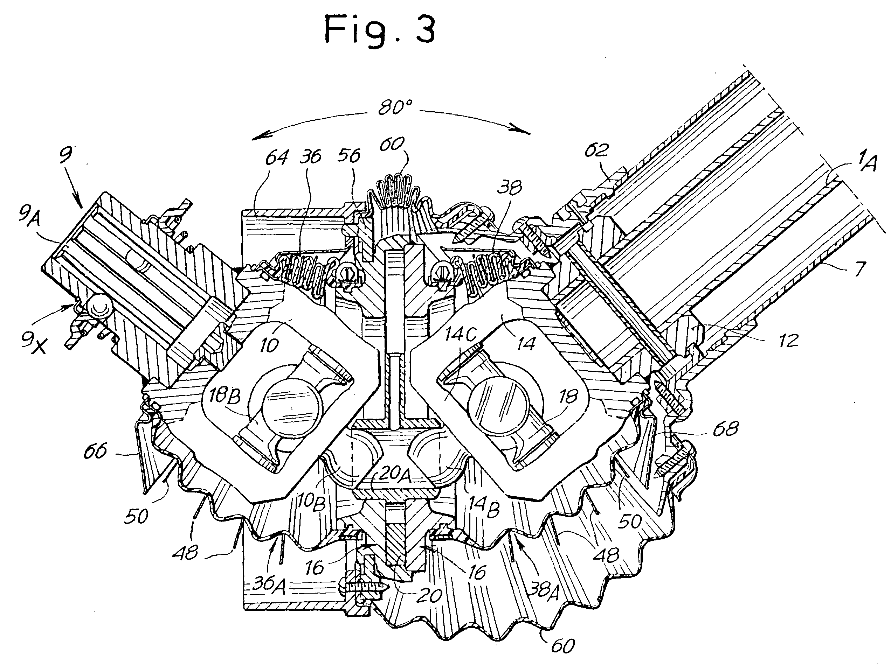

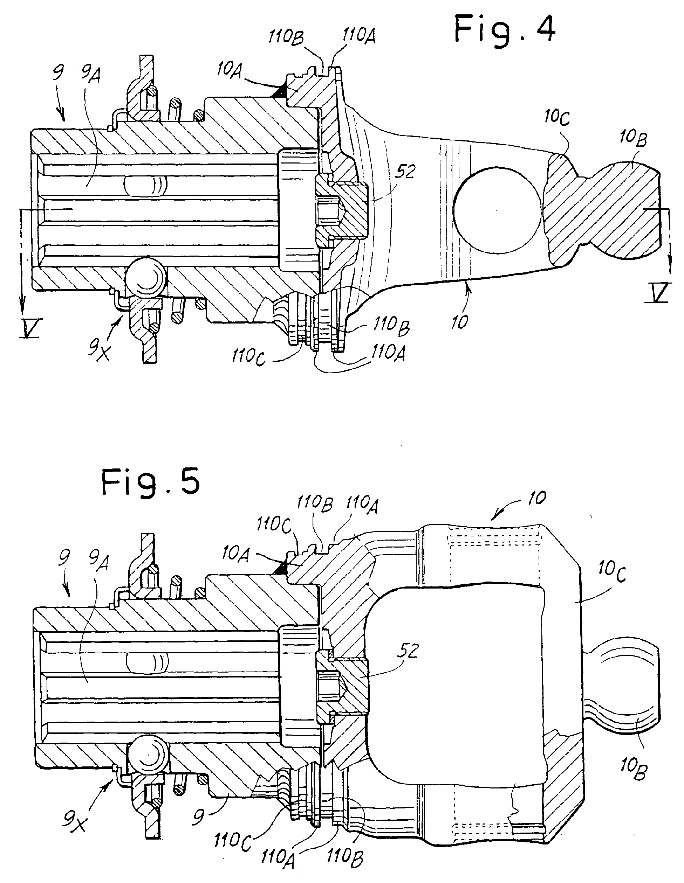

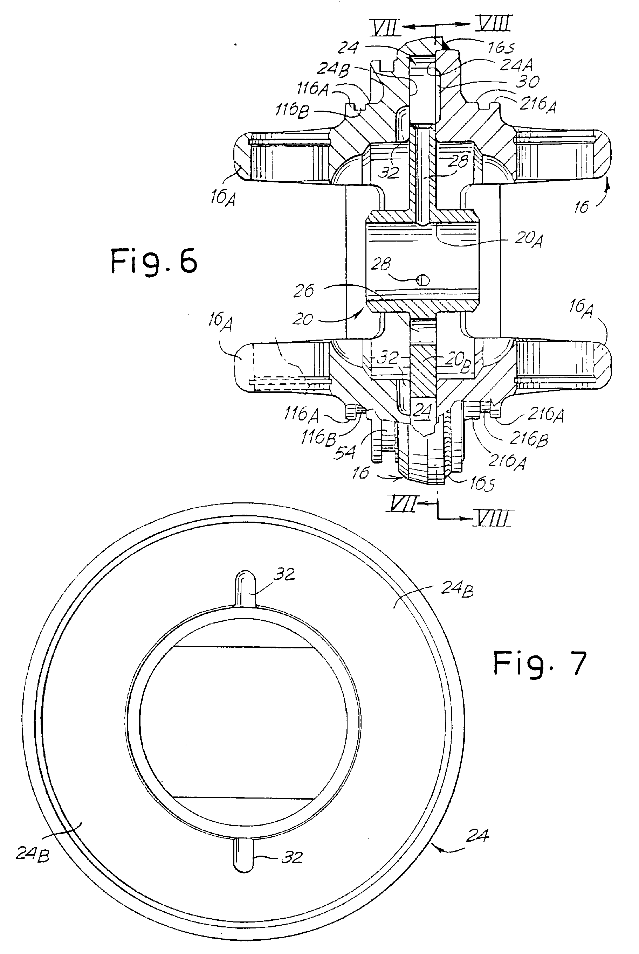

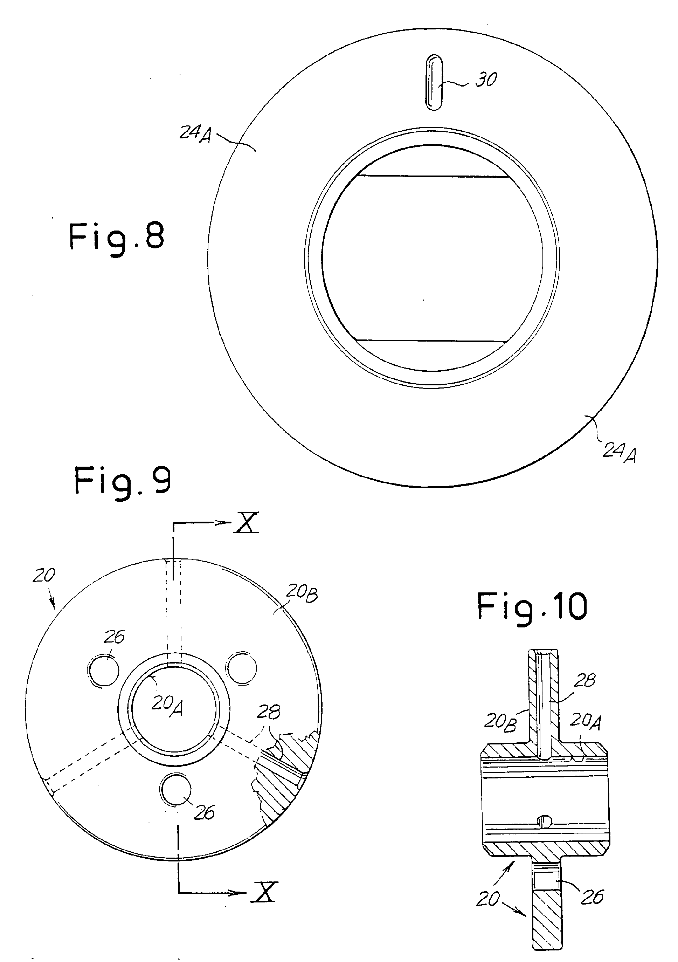

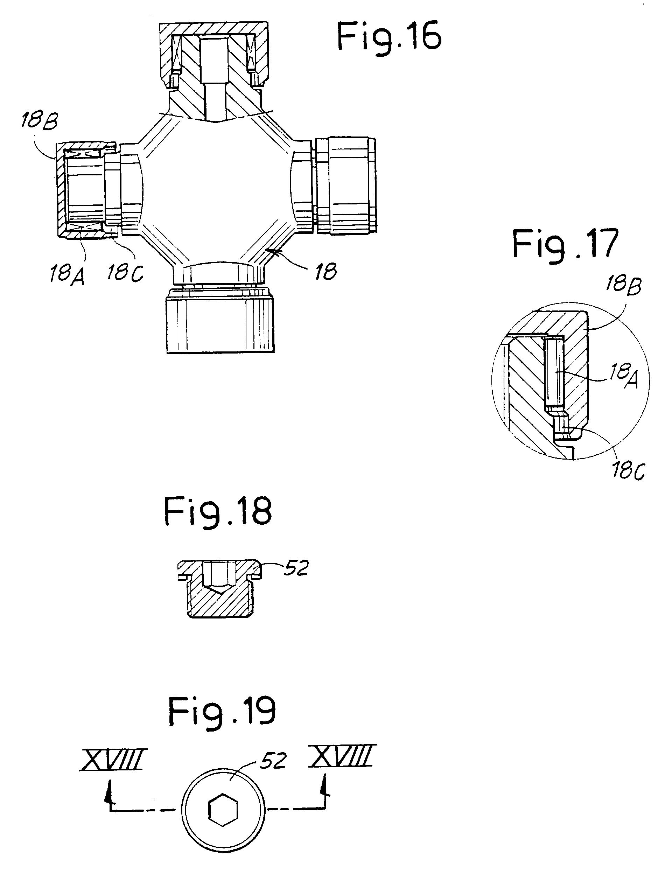

The constant velocity joint 5 is of the wide-angle type; it comprises a yoke member 9, for input to the joint or output from it, this yoke having a grooved seat 9A for coupling to a transmission member with which the constant velocity joint is combined. The member 9 is integral (see Fig. 3 and subsequent figures) with the base 10A of a yoke 10 forming part of the said joint 5. The telescopic shaft 1 is engaged with a member 12 which is integral with the base 14A of a yoke 14 forming part of the said constant velocity joint. The two yokes 10 and 14 (see, in particular, Figs. 4 and 5) are extended by terminal cross-pieces 10C, 14C, from which ball ends 10B, 14B extend, the two ball ends being opposite each other. The constant velocity joint also comprises a central core 16 (see also Fig. 6), which consists of two parts which are essentially symmetrical with respect to a plane which is transverse with respect to the overall axis of the joint in question when the components for input to and output from the members 9 and 12 are aligned with each other; the said two parts of the member 16 are welded together at 16S. The central core 16 has two opposing extensions 16A, the extensions of each pair forming rotary seats for a cross journal 18 (see also Figs. 16 and 17); each cross journal 18 is additionally pivoted on the corresponding yoke 10 or 14 described above. The arrangement described above forms a typical constant velocity joint, which is completed with a securing member 20 (see also Figs. 9 and 10) extending in the form of a disc 20B having at its center a circular cylindrical through hole 20A, which houses the opposing ball ends 10B and 14B of the two yokes 10 and 14; the discoid securing member 20 is housed in such a way to be able to slide in a housing 24 which is formed by two parallel and opposing walls 24A, 24B of the two components of the central core 16; these two components are suitably machined and then welded at 16S to slidably engage the discoid securing member 20, 20B. The whole of what has been described up to this point is an example of a shaft with a constant velocity joint of a known type, of the class which can provide transmission even in conditions of considerable angulation, as shown in Fig. 3.

According to the invention and the illustrated example, the disc part 20B of the said discoid member 20 has (see also Figs. 9 and 10) a number of through holes 26 together with radial ducts 28 which extend between the periphery of the discoid member 20B and the central through seat 20A of the said securing member 20. The walls 24A and 24B - which delimit the sliding housing 24 in a plane transverse with respect to the axis of the central core 16 for the disc part 20B of the securing member 20 - have (see also Figs. 6 to 10) suitably distributed recesses 30 and 32 respectively. These recesses 30 and 32, together with the through holes 26 and the radial ducts 28, allow the circulation of a liquid lubricant intended for the lubrication of the surfaces, which slide with respect to each other, of the housing 24 and of the disc 20B, and of the through seat 20A and of the ball ends 10A, 10B and 14B, which are housed in the said through seat.

Each of the bases 10A and 14A of the yokes 10 and 14 (see also, in particular, Figs. 4 and 5) has a track 110A, 114A which is essentially cylindrical, with an intermediate annular channel such as that indicated by 110B, for the purposes stated below; a further channel 110C is also provided adjacently to the annular track 110A of the base 10A of the yoke 10, and a similar channel is provided adjacently to the track 114A of the base 14A of the yoke 14. Correspondingly, in the central core 16 there are provided (see, in particular, Fig. 6) two cylindrical annular tracks 116A and 216A, on the sides facing the yokes 10 and 14 respectively, each track having a central annular channel 116B, 216B; the diameters of the tracks 116A and 216A are greater than the diameters of the tracks 110A and 114A.

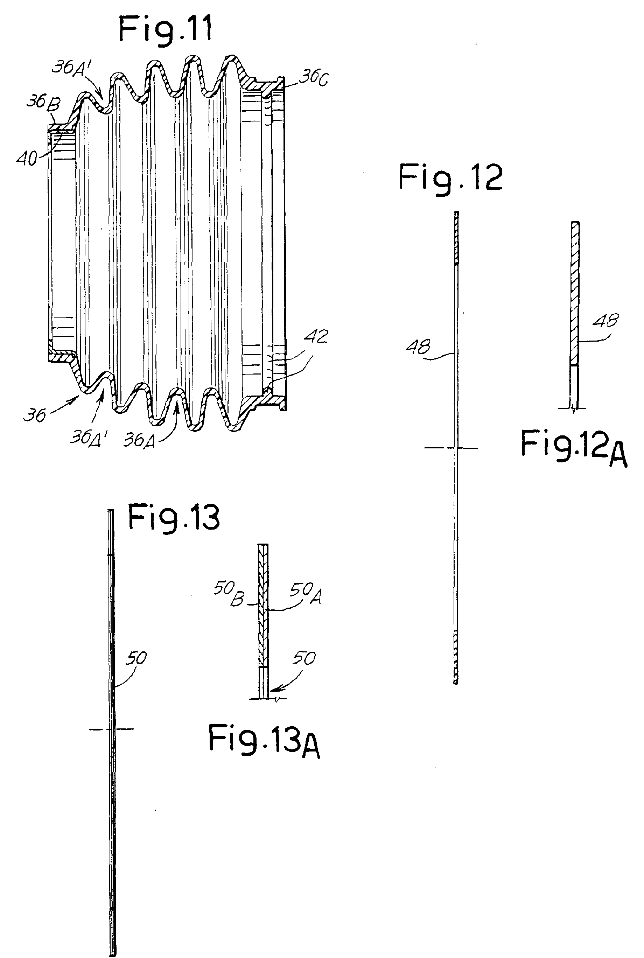

Fig. 11 shows in isolation a protective bellows 36 made from elastomeric material, and particularly from a rubber resistant to lubricating oils; one of these bellows 36 is designed to be fitted on the tracks 110A, 116A; a similar protective bellows 38 is designed to be fitted on the annular tracks 114A of the base 14A of the yoke 14 and on the track 216A, 216B of the central core 16.

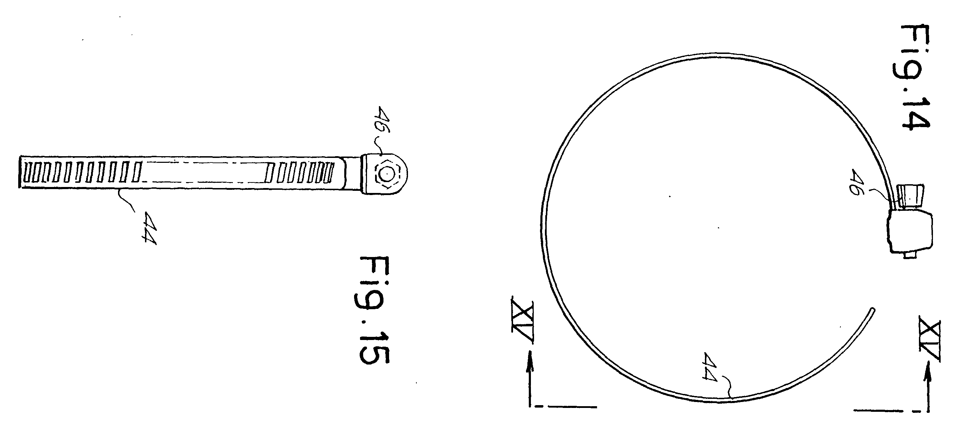

With regard to the details of the bellows 36 (see Fig. 11), this is made in the form of a bellows, and therefore has a certain number of external annular grooves 36A. The said bellows 36 has an annular terminal edge 36B having an internal diameter matching that of the annular track 110A, and a second terminal edge 36C having an internal diameter matching that of the annular track 116A. The terminal edge 36B is provided with an internal metal ring 40, while the terminal edge 36C has an internal annular projection 42. The protective bellows 36 is fitted so that it extends between the base 10A of the yoke 10 and the central core 16; in particular, the edge 36B with the metal ring 40 is fitted onto the track 110A, a sealing ring being housed in the channel 110B and interacting with the inner surface of the metal ring 40. The terminal edge 36C of the protective bellows 36 is engaged with the annular track 116A, the internal projection 42 being housed in the annular channel 116B. To ensure the engagement of the edge 36C with the annular track 116A, a tightening band 44 is applied (see also Figs. 14 and 15) and is provided with a screw clamp 46 of a known type, by means of which the tightening is carried out. A fitting of an entirely similar type is provided for the protective bellows 38.

Flat rings 48, 50 (see also Figs. 12 to 13A), extending approximately in planes transverse with respect to the axis of the joint in its aligned configuration, are fitted in the annular external grooves such as those indicated by 36A, 36A1, 38A, 38A1 of the protective bellows 36 and 38, before the said bellows are fitted; these flat rings 48 and 50 are made from synthetic resin (such as nylon or the like), have a radial widths approximately equal to the depths of the external grooves of the bellows, and are designed to provide a considerable degree of stability of the bellows configuration of the individual protective bellows 36 and 38, and to prevent the direct contact of the rubber surfaces of the opposing sides of the grooves. The flat rings 50 (see also Figs. 13 and 13A), which are present at least on the annular grooves 36A1 and 38A1 closest to the edges 36B and 38B which are fitted on the bases 10A and 14A respectively of the yokes 10 and 14, are extended with two annular spacers 50A, 50B (Figs. 13 and 13A) which are thinner than the thicknesses of the other flat rings 48, and are therefore more flexible, to permit the greater cyclical curvature which they undergo in the conditions of greater angulation of the constant velocity joint 5.

Figs. 16 and 17 show one of the cross journals 18, whose ends are typically provided with needle bearings 18A or the like, with an external rolling track formed by cups 18B. According to the invention, the conventional annular seals which are usually housed in the seats 18C to retain the dense lubricant (grease) are dispensed with for the oil-bath lubrication of these bearings.

It is clear from the above description that the constant velocity joint, indicated in a general way by 5 and extending essentially between the bases 10A and 14A of the yokes 10 and 14 which are integral with the input and output members such as those indicated by 9 and 12, is protected by the two bellows 36 and 38; this is because these two bellows 36 and 38 form a completely enclosed space around the constant velocity joint 5, and this space can have a part of its volume (particularly a part which is of the order of 60%) occupied by a liquid lubricant, or by a lubricant which when heated takes on a fluidity comparable to that of the liquid lubricant; thus the constant velocity joint can be lubricated essentially by the "oil-bath" system, rather than by a conventional grease lubrication system.

This overcomes the drawbacks of grease lubrication, which requires continual intervention for replacement of the lubricant grease, to compensate for the losses of grease which occur regularly during use and which constitute an environmental problem, as well as representing a considerable cost and entailing the risk of damage due to a possible failure to perform maintenance operations. By contrast, the liquid lubricant which is contained and retained in the space delimited by the protective bellows 36 and 38 does not require continual interventions for replenishment and does not cause any dispersion to the exterior, with evident advantages in terms of economy and environmental protection.

In order to introduce the liquid lubricant into the space delimited as indicated above by the two bellows 36, 38, a through hole is provided in the base of one of the yokes and in particular, according to the drawing, in the base 10A of the yoke 10, and is sealed by a screw plug 52 which is easily accessible through the axial grooved cavity 9A of the terminal member 9, which is provided with a conventional quick-release coupling 9X for a grooved terminal of a shaft of the transmission of which the constant velocity joint 5 forms part.

It should be noted that the presence of the through holes 26 and of the radial channels 28 in the discoid member 20B, and the presence of the recesses 32 and 30 in the walls 24A and 24B of the housing 24, provide considerable possibilities for the circulation of the liquid lubricant, for lubricating the disc 20B of the securing member 20 which is movable in the sliding housing 24, and for lubricating the ball ends 10B and 14B of the yokes 10 and 14 in their common through seat 20A of the securing member 20, and in the roller bearings 18A; the whole being achieved without any need for forced circulation but simply with the aid of the movements which are imparted to the constant velocity joint both by its rotation and by the angulation of the components of the joint with respect to each other. In particular, no maintenance or frequent inspection of the oil level are required. It is sufficient to make occasional brief inspections of the bellows 36, 38 for easy identification of possible oil leaks.

Because of its configuration, the constant velocity joint can also be produced to operate with grease lubrication; it is simply necessary to provide the described constant velocity joint - after removal of the bellows 36 and 38 - with the conventional greasers on the core 16 and with annular seals in the seats 18C and other conventional arrangements for this type of joint. It is possible to dispense with some machining operations, such as those for forming the seats for the engagement of the terminal edges of the bellows 36 and 38 on the yokes and on the central core.

In order to provide an accident prevention device, according to current safety regulations, around the rotating parts consisting of the components 10, 14 and 16 and the bellows 36 and 38, an annular channel 54 is provided (see Figs. 1, 2, 3 and 6) in the central core 16 for an annular support 56 provided with a greaser 58 (Fig. 2), which is fairly easily accessible for periodic injections of lubricating grease, with a known type of arrangement, the greaser 58 being designed to lubricate only the annular groove 54, in order to permit relative angular movement between the rotating core 16 and the annular support 56, which for reasons of accident prevention must not rotate.

As shown in Figs. 1 to 3, the assembly consisting of the constant velocity joint and its two protective bellows 36 and 38 is protected by a further protective bellows 60, which is fitted, in a known arrangement 62, on the protective sleeve 7 of the telescopic tube 1. This protective bellows 60 is engaged with the annular support 56, with which a further guard 64 of the rigid type is also engaged. Two flat truncated conical guards 66 and 68 can be engaged with the bases 10A and 14A of the yokes 10 and 14, as shown in the drawing, to complete the accident prevention device and to prevent contact between the internal components; in respect of this characteristic, reference should also be made to the angulated configuration shown in Fig. 3.

It is to be understood that the drawing shows only an example provided solely as a practical demonstration of the invention, and that this invention can be varied in its forms and arrangements without departure from the scope of the guiding principle of the invention. The presence of any reference numbers in the attached claims has the purpose of facilitating the reading of the claims with reference to the description and to the drawing, and does not limit the scope of the protection represented by the claims.

For example, it is also possible to apply the invention by providing - in place of the two bellows 36, 38 - a single bellows extending between the two bases 10A and 14A of the yokes 10 and 14, one at least of which is suitably oversized to meet the requirements of fitting. This single bellows, in an intermediate position, can be supported on the periphery of a core suitably modified from that indicated by 16, and should be provided externally with a rigid component equivalent to that indicated by 56; the whole assembly will have equivalent functions to those of the components 56, 60 and 64.

## Claims

1. Wide-angle constant velocity joint, **characterized in that** it comprises flexible protective means which are sealingly engaged with input and output members of the joint, and which delimit a space which surrounds the joint and which can contain liquid lubricant, for oil-bath lubrication of the said joint.

2. Wide-angle constant velocity joint, comprising two yokes forming the input and output members of the joint, two cross journals and a central core forming a support for an accident prevention device and a sliding housing in a transverse geometrical plane for a securing member for the ball ends of the two yokes, **characterized in that** it comprises, on the central core (16) and on the base (10A; 14A) of each of the two yokes (10, 14), annular tracks (116A, 216A; 110A; 114A) which can engage there in a sealed way with the terminal edges (36C, 36B; 38C; 38B) of protective bellows means (36; 38), which delimit a space which surrounds the joint and can contain liquid lubricant for oil-bath lubrication.

3. Constant velocity joint according to Claim 1 or 2, **characterized in that** it comprises, in a central position, a support for an accident prevention device.

4. Constant velocity joint according to Claim 2, **characterized in that** said central core (16) has two annular tracks (116A, 216A), each of which engages with one of the terminal edges (36C; 38C) of two opposing protective bellows (36; 38).

5. Constant velocity joint according to Claim 2 or 4, **characterized in that** at least said tracks (116A; 216A) have surfaces of revolution, and in particular cylindrical surfaces, with which the terminal edges (36C; 38C) of the said bellows (36; 38) make contact, bands (44, 46) being provided for tightening said terminal edges onto said tracks.

6. Constant velocity joint according to at least one of the preceding claims, comprising a yoke member (9) with a grooved seat (9A) for fitting to a grooved shaft, **characterized in that** in the bottom of said seat (9A) there is formed a through hole which opens between the arms of the corresponding yoke (10), for supplying liquid lubricant to the space surrounding the joint; said hole being closed when required by a plug (52).

7. Constant velocity joint according to Claim 1 or 2 at least, in which said securing member (20) forms a central through seat (20A) for the ball ends (10B; 14B) of the two yokes (10; 14) and a disc (20B) designed to slide in said sliding housing (24) of said central core (16), **characterized in that** recesses (30; 32) are formed in the facing walls (24A, 24B) of said sliding housing (24) and said disc (20B) has through holes (26) and radial ducts (28) opening into said central through seat (20A), to permit the spontaneous circulation of the liquid lubricant during the operation of the joint.

8. Constant velocity joint according to Claim 1 or 2 at least, **characterized in that** said protective means (36; 38) are made in the form of bellows and are provided with flexible flat rings (48; 50) which are housed in the external annular grooves (36A, 36A1; 38A, 38A1) of said bellows.

9. Constant velocity joint according to Claim 8, **characterized in that** each of the flat rings (50) adjacent to the bases (10A; 14A) of the yokes (10; 14) consists of two independent flat spacers which are highly flexible in combination.

10. Constant velocity joint according to at least one of the preceding claims, **characterized in that** it comprises, on the exterior of said protective bellows (36, 38), further protective elements which are flexible (60) and/or rigid (56, 64), resting on the central core (16) and provided with at least one greaser (58) for lubricating grease.

11. Constant velocity joint according to at least one of the preceding claims, **characterized in that** it comprises flat protective devices (66, 68) engaged with the bases of the yokes (10,14).

12. Wide-angle constant velocity joint, for agricultural machinery and for other applications, with oil-bath lubrication; the whole as described above and as represented by way of example in the attached drawing.
